# EUROPÄISCHE PATENTSCHRIFT

(11) **EP 3 388 767 B1**
(45) Veröffentlichungstag und Bekanntmachung des Hinweises auf die Patenterteilung: **28.08.2019**
(21) Anmeldenummer: 17166238.0
(22) Anmeldetag: 12.04.2017
(51) Int. Cl.: F27B 17/02, A61C 13/20, A61C 13/15

(54) **DENTALBEHANDLUNGSGERÄT**
DENTAL TREATMENT DEVICE
APPAREIL DE TRAITEMENT DENTAIRE

(43) Veröffentlichungstag der Anmeldung: 17.10.2018
(73) Patentinhaber: Ivoclar Vivadent AG, 9494 Schaan (LI)
(72) Erfinder: Jussel, Rudolf, 6800 Feldkirch (AT)
(74) Vertreter: Baronetzky, Klaus

(56) Entgegenhaltungen:
- EP-A1- 0 380 345
- DE-A1- 2 114 755
- DE-A1- 19 824 497
- DE-U1-202011 003 179

## Beschreibung

Die Erfindung betrifft ein Dentalbehandlungsgerät, gemäß dem Oberbegriff von Anspruch 1.

Dentalbehandlungsgeräte, zu denen beispielsweise Dentalbrennöfen, Sinteröfen, Polymerisationsgeräte und Dentalpressöfen gehören, werden mit unterschiedlichen Öffnungsmechanismen realisiert.

Typischerweise weist ein Kopf des Dentalbehandlungsgeräts einen von unten zugänglichen Hohlraum aus, der den Brennraum - oder gegebenenfalls den Pressraum - bildet. Ein Brennraumboden bildet eine Aufnahmeplatte für Dentalrestaurationsteile aus.

Dieser Brennraum ist von einer - ggf. mehreckig - ringförmigen Heizeinrichtung als Energiequelle umgeben. Die ringförmige Heizeinrichtung kann in Form eines Zylinders und/oder einer Boden und/oder einer Deckenheizung und/oder Belichtungseinheit ausgebildet sein, und kann eine sich spiralig erstreckende Heizwendel aufweisen, oder aber beispielsweise eine Induktionsheizung, eine Mikrowellenheizung, gegebenenfalls mit Suszeptor, oder einer LED Beleuchtung oder dergleichen.

In Kombination mit diesem Ofenkopf haben sich unterschiedliche Öffnungskonzepte herausgebildet. Zum einen ist es möglich, den Brennraumboden vertikal verfahrbar anzuordnen. Das Öffnen des Brennraums erfolgt dann so, dass der Brennraumboden auf einer Art Lift vertikal nach unten verfahren wird, so dass die Dentalrestaurationsteile frei zugänglich sind. Zum Schließen wird Brennraumboden nach oben verfahren.

Alternativ ist es möglich, den Brennraumboden als Basis fest und stabil zu lagern, und den Ofenkopf selbst beweglich auszugestalten. Hierzu ist es möglich, eine ebenfalls vertikale Bewegung des Ofenkopfes zu erlauben, oder aber den Ofenkopf schwenkbar zu lagern.

Mit dieser Lösung lässt sich auch die Abkühlphase durch partielles Aufschwenken des Ofenkopfs gut einstellen.

Derartige Lösungen sind seit langem bekannt. Eine Verbesserung, die insofern eine Kombination dieser beiden Lösungen darstellt, lässt sich der DE 195 42 984 C1 entnehmen. Gemäß dieser Lösung wird ein Hubmechanismus und ein Schwenkmechanismus kombiniert, so dass sich die Vorteile beider Lösungen verbinden lassen.

Die bekannten Lösungen haben jedoch den gewissen Nachteil, dass je nach Relativstellung des Ofenkopfes zum Brennraumboden die Energie aus dem Arbeitsraum mitunter noch auf das Objekt oder das Umfeld oder den Bediener einwirkt. Auch kann die Zugänglichkeit für die Bestückung oder Entnahme und die Sichtbarkeit auf die Dentalrestaurationsteile nicht immer perfekt sein. Der Bediener muss daher sich hinunter beugen und gegebenenfalls in die Hocke gehen, um eine gute Sicht auf die zu handhabenden Dentalrestaurationsteile zu haben.

Auch ist häufig der Ofenkopf ausgesprochen heiß, was die Bedienung nicht unbedingt erleichtert.

Auch wenn hier als Dentalbehandlungsgeräte schwerpunktmäßig Dentalpressöfen und Dentalbrennöfen erwähnt sind, versteht es sich, dass hier unter Dentalbehandlungsgeräten auch entsprechende andere Dentalbehandlungsgeräte als Öfen relevant sind. Hierzu gehören beispielsweise Lichthärtgeräte, wie z.B. in der EP 0 380 345 A1 beschrieben, die eine entsprechende Lichthaube oder ein Lichtkopf haben können. Alternativ auch Vorwärmöfen, die ebenfalls einen entsprechenden Kopf mit einer Energiequelle haben können und als Dentalbehandlungsgeräte anzusehen sind.

Demgegenüber liegt der Erfindung die Aufgabe zu Grunde, ein Dentalbehandlungsgerät gemäß dem Oberbegriff von Anspruch 1 zu schaffen, das eine verbesserte Handhabung von Dentalrestaurationsteilen ermöglicht.

Diese Aufgabe wird erfindungsgemäß durch Anspruch 1 gelöst. Vorteilhafte Weiterbildungen ergeben sich aus den Unteransprüchen.

Erfindungsgemäß sind die Dentalrestaurationsteile in der Präsentationsposition, welche sich oberhalb der Durchtrittsausnehmung befindet, - nach der Art einer Präsentiervorrichtung - frei zugänglich, also, ohne dass ein darüber befindlicher Ofenkopf die Zugänglichkeit stören würde. Hierzu ist es vorgesehen, sie auf einer Aufnahmeplatte mit einem Stempel zu lagern. Dieser Stempel wird von unten nach oben vollständig durch das Dentalbehandlungsgerät im Übrigen hindurch gefahren und kommt daher in der Präsentationsposition oben zu liegen.

"Oben" bedeutet in diesem Fall oberhalb des Brennraums. Der Ofenkopf weist erfindungsgemäß oben eine Durchbrechung auf, die als Durchtrittsausnehmung ausgebildet ist.

Insbesondere erstreckt sich die Durchtrittsausnehmung durch die Oberwand des Ofenkopfes.

Der Durchmesser und die Form dieser Durchtrittsausnehmung lässt sich in weiten Bereichen an die Erfordernisse anpassen. Dies gilt auch für die relative Form zum Brennraum oder Pressraum. Diese Formen können zueinander kongruent sein, sie können deckungsgleich sein, aber es ist auch möglich, dass die Form des Brennraums sich innerhalb der der Durchtrittsausnehmung erstreckt oder umgekehrt.

.Erfindungsgemäß ist es günstig, dass der Benutzer des erfindungsgemäßen Dentalbehandlungsgeräts nicht gemäß den Bearbeitungsanleitungen gezwungen ist, mit Wärmeschutzhandschuhen zu arbeiten. Die Nähe zum heißen und offenen Ofenkopf erforderte es bislang, eine entsprechende Handhabung vorzuschreiben.
Demgegenüber ist es erfindungsgemäß jedoch vorgesehen, dass die Dentalbehandlungsteile erstmals frei zugänglich sind. Zudem schließt ein erfindungsgemäße Aufnahmeplatte für die Dentalrestaurationsteile den Ofenkopf ab. Bei der Entnahme dieser ist der Brennraum von den Dentalrestaurationsteilen thermisch getrennt.

Der Deckel des erfindungsgemäßen Dentalbehandlungsgerätes weist typischerweise keine Heizung auf und bedarf daher aus elektrischer Sicht keines Berührungsschutzes. Der Deckel ist gegenüber dem Ofenkopf im Übrigen anhebbar. Ferner kann der Deckel auch seitlich weggeschwenkt werden, so dass oberhalb der Dentalrestaurationsteile sich die Raumdecke befindet.

Bevorzugt endet der Stempel an seinem oberen Ende an der Aufnahmeplatte. Der Stempel kann einen geringeren Durchmesser als diese aufweisen, oder höchstens den gleichen Durchmesser. Die Aufnahmeplatte ist in die Durchtrittsausnehmung einfahrbar und passt bevorzugt durch die Durchtrittsausnehmung hindurch, und zwar mit einem Bewegungsspiel, das bevorzugt weniger als 5 mm und besonders bevorzugt 0,5 mm bis 2 mm beträgt.

Der Stempel kann auch einen größeren Durchmesser als die Aufnahmeplatte ausbilden. Dies dient zum einem entweder zum besseren Abschluss bei geöffneter Position oder aber die Aufnahmeplatte ist im Stempel eingelegt und damit gegen seitliche Verschiebung, verrutschen gesichert.

Mit einer derartigen Ausgestaltung ist sichergestellt, dass keine Dentalrestaurationsteile in den Spalt zwischen Durchtrittsausnehmung und Aufnahmeplatte fallen.

Die Aufnahmeplatte kann eben sein, es ist aber auch möglich, Vertiefungen vorzusehen, beispielsweise in Form von konzentrischen Kreisen. Derartige Formen eignen sich besonders für das Abstellen von Muffeln und/oder von Brenngutträgern.

Wenn die Aufnahmeplatte in der Präsentationsposition mit ihrer Oberkante bündig mit dem Ofenkopf ist, liegt eine vergleichsweise große Handhabungsfläche vor. Es ist dann beispielsweise möglich, fertig gebrannte Dentalrestaurationsteile zur Seite zu schieben und die noch zu brennenden Dentalrestaurationsteile an geeigneter Stelle auf der Aufnahmeplatte zu platzieren.

Während hier von Brennraum oder Pressraum und von Ofenkopf und entsprechenden Begriffen die Rede ist, versteht es sich, dass bei Realisierung des Dentalbehandlungsgeräts in anderer Form als Ofen hierunter entsprechende Begriffe zu verstehen sind, also zum Beispiel "Kopf des Dentalbehandlungsgeräts" anstelle von "Ofenkopf" oder "Arbeitsraum" oder "Prozessraum" anstelle von "Brennraum".

Erfindungsgemäß ist der Stempel zusammen mit der Aufnahmeplatte beweglich gegenüber dem Dentalbehandlungsgerät im Übrigen gelagert. Er weist einen Antrieb auf, der die Bewegung gesteuert vornimmt. Der Antrieb kann ein elektrische Antrieb sein, beispielsweise über einen Schrittmotor mit Getriebe, einem Linearmotor oder dergleichen, aber auch ein pneumatischer oder hydraulischer Antrieb oder gegebenenfalls auch ein manueller Antrieb, also beispielsweise ein Hebel, über welchen die verschiedenen Positionen des Stempels mit der Aufnahmeplatte anfahrbar sind.

Zu diesen gehört eine Arbeitsposition und eine Präsentationsposition. Die Arbeitsposition ist so gewählt, dass bei Anordnung der Aufnahmeplatte in der Arbeitsposition oder des Stempels in der Arbeitsposition - was einander entspricht - die Behandlung der Dentalrestaurationsteile in der gewünschten Weise vorgenommen werden kann. Hierbei wäre dann beispielsweise das Lichthärten der Dentalrestaurationsteile zu nennen, wenn das Dentalbehandlungsgerät als Lichthärtegerät ausgebildet ist oder aber das Brennen oder Kristallisieren oder Sintern bei Realisierung als Dentalbrenn- bzw. Sinterofen.

Erfindungsgemäß ist es günstig, wenn die Aufnahmeplatte in einer Vertiefung auf dem Stempel eingelegt ist. Damit ist diese gegen ein verrutschen während der Bewegung oder aber während der Be- und Entstückung beispielsweise mit einem Stützkörper, welcher das und/oder die dentalen zu bearbeitenden Objekte hält, gesichert. In Folge ist die Aufnahmeplatte auch gegen ein Verkanten bei der Bewegung des Stempels gesichert.

ruht. Diese bilden insofern einen Anschlag für die Bewegung nach unten, und damit einen Bezugspunkt.

Erfindungsgemäß ist es vorgesehen, dass die Präsentationsposition sich oberhalb der Arbeitsposition befindet. Für die Überführung von der Arbeitsposition in die Präsentationsposition wird dementsprechend der Stempel und damit die Aufnahmeplatte über den Antrieb nach oben bewegt. Es versteht sich, dass die Bewegung - und damit die Ausrichtung des Stempels - insofern nicht exakt vertikal sein muss. Gemäß einer modifizierten Ausgestaltung ist eine schräge Aufwärtsbewegung, also eine solche entlang einer geneigten Bahn vorgesehen.

Ferner ist es auch möglich, in einer modifizierten Ausgestaltung den Stempel mit der Aufnahmeplatte weiter nach unten als bis zum Boden des Brennraums zu bewegen. Bei dieser Ausgestaltung ist dementsprechend eine Durchtrittsöffnung vorgesehen, durch die hindurch die Aufnahmeplatte oder mindestens der Stempel passt.

Es ist auch möglich, lediglich den Stempel nach weiter unten zu bewegen, so dass der Stempel den Brennraum nach unten verlässt, während die Aufnahmeplatte unten im Brennraum verbleibt. Diese Ausgestaltung ist besonders für Wartungszwecke geeignet, anlässlich derer der Antrieb und verschiedene Teile von Stempel und Aufnahmeplatte gereinigt und gewartet werden können. Alternativ läßt sich der Stempel für Wartungszwecke ganz nach oben verfahren, so dass die Wartung von oben erfolgen kann.

Die Aufnahmeplatte kann an dem Stempel fest gelagert sein. Alternativ ist sie in einem gewissen Grad beweglich gelagert, beispielsweise elastisch beweglich mit einer Nachgiebigkeit von beispielsweise 5 mm. Die nachgiebige Lagerung ermöglicht es, auch Schrägstellungen des Antriebs relativ zum Dentalbehandlungsgerät im Übrigen auszugleichen. Sie kann auch auf dem Stempel frei aufliegen.

In einer weiteren, besonders bevorzugten Ausgestaltung ist es vorgesehen, dass der Stempel mit der Aufnahmeplatte in der Präsentationsposition die Brennkammer an ihre Oberwand gleichsam abschottet. Oberhalb der Brennkammer ist durch freie seitliche Luftzufuhr eine schnelle Abkühlung der Dentalrestaurationsteile gewährleistet.

Demgegenüber verhindert der Stempel mit der Aufnahmeplatte die vertikale Luftzirkulation durch die Durchtrittsausnehmung hindurch. Der Abkühlgradient im Ofenkopf und insbesondere an den Heizelementen wird geringer gehalten, welches der Lebensdauer der Heizelemente durch Reduktion von thermalem Stress zu Gute kommt. Auch kann die Energie gespeichert werden und für einen nachfolgenden Prozessschritt z.B. für das Vortrocknen einer dentalen Restauration genutzt werden.

In dieser Stellung kann gegebenenfalls das Heizelement und der Stempel sehr gut vorgeheizt werden.

Erfindungsgemäß ist es ferner günstig, dass ein Deckel vorgesehen ist, der an dem Dentalbehandlungsgerät direkt oder indirekt gelagert ist. Der Deckel verschließt den Ofenkopf, wenn der Stempel mit der Aufnahmeplatte in die Arbeitsposition abgesenkt wird. Bevorzugt tritt er von oben in die Durchtrittsausnehmung ein und verschließt diese, insbesondere formschlüssig. Die Bewegung des Deckels kann synchron mit der Bewegung des Stempels erfolgen, so dass der Deckel angehoben wird, sobald der Stempel die Aufnahmeplatte von der Arbeitsposition anhebt.

Es ist aber auch möglich, insofern eine Entkopplung vorzunehmen, so dass der Deckel beispielsweise erst dann angehoben wird, wenn sich die Dentalrestaurationsteile auf der Aufnahmeplatte knapp unterhalb des Deckels befinden. Bevorzugt erfolgt der Antrieb so, dass der Deckel nicht mit den Dentalrestaurationsteilen in Kontakt kommen kann.

In einer vergleichsweise einfachen Ausgestaltung weist der Deckel drei oder mehrere in die Durchtrittsausnehmung hineinragende und dies durchtretende Beine auf. Diese Beine stützen sich am Außenumfang der Aufnahmeplatte ab, so dass der Deckel gleichsam automatisch angehoben wird, wenn die Aufnahmeplatte sich ihm nähert.

Bevorzugt zentriert sich der Deckel beim Absenken automatisch in oder an der Durchtrittsausnehmung.

Der Deckel weist bevorzugt dort einen Sitz an der Durchtrittsausnehmung auf. Beispielsweise kann ein Teil des Deckels in die Durchtrittsausnehmung hineinragen und ein umlaufender Flansch auf deren Außenrand aufliegen.

Verschiedene weitere Ausgestaltungen des Deckels sind ebenso möglich, ohne den Bereich der Erfindung zu verlassen.

Beispielsweise kann der Deckel auch über einen Antrieb von oben angehoben werden. Es ist auch möglich, den Deckel wegzuschwenken, entweder schräg nach oben oder auch seitlich.

In einer weiter modifizierten Ausgestaltung wird der Deckel seitlich weggeschoben und insofern aus dem Handhabungsbereich für den Benutzer entfernt.

Es ist bevorzugt, dass der Deckel die Bedienung des Dentalbehandlungsgeräts in der Präsentationsposition nicht beeinträchtigt. Der Deckel hat bevorzugt ein ganz geringes Gewicht z. B. weniger als ein Zehntel des Gewicht des Ofenkopfes. Er wirkt in seiner geschlossenen Stellung wärmedämmend und/oder lichtdämmend und/oder abdichtend.

Das erfindungsgemäße Dentalbehandlungsgerät ist nicht auf einen zylindrischen Arbeitsraum beschränkt. Bevorzugt ist der Durchmesser und die Höhe des Arbeitsraums kompakt, beispielsweise 40 mm bis 100 mm im Durchmesser und 20 mm bis 120 mm in der Höhe.

Es kann aber auch günstig sein, eine in der Draufsicht unrunde Ausgestaltung zu realisieren, beispielsweise eine quadratische Ausgestaltung, eine rechteckige Ausgestaltung oder auch eine elliptische Ausgestaltung. Eine derartige Ausgestaltung lässt auch die Behandlung von nichtkreissymmetrischen Dentalrestaurationsteilen, also insbesondere länglichen Dentalrestaurationsteilen, dergestalt zu, dass mit einem vergleichsweise kleinen Brennraum und hoher Effizienz gearbeitet werden kann.

Dies ermöglicht es auch, mit dem erfindungsgemäßen Brennraum ein rasches und energieeffizientes Aufheizen und damit einen schnellen Brennzyklus zu realisieren. Zudem können bei angepassten Brennräumen die Baugröße klein gehalten werden und gegebenenfalls die benötigten Volumina von Prozessgassen, z.B. Argon klein gehalten werden.

In weiterer vorteilhafter Ausgestaltung ist es vorgesehen, die Aufnahmeplatte so weit anzuheben, dass eine automatische Beschickung und Bestückung realisierbar ist. Hierzu lässt sich beispielsweise eine Gabel seitlich verfahren, die das oder die Dentalrestaurationsteile oder einen Träger mit aufgelegtem Dentalrestaurationsteil aufnehmen kann. Durch das seitliche Verfahren können die Dentalrestaurationsteile durch Zusammenwirken der Gabel und des Stempels in die Position auf der Aufnahmeplatte gebracht werden, aber auch von dieser entfernt werden. Beispielsweise durch Anheben.

Es versteht sich, dass insofern anstelle der reinen linearen Bewegung auch mehrdimensionale Bewegungen bei Bedarf realisierbar sind.

In vorteilhafter Ausgestaltung der Erfindung ist es vorgesehen, im Bereich der Aufnahmeplatte und / oder des Stempels eine Heizung als Teil der Energiequelle vorzusehen. Diese Lösung ermöglicht es, den Temperaturgradienten im Arbeitsraum zu reduzieren, gegebenenfalls sogar auf Null. Es versteht sich, dass eine derartige Heizung mit ringförmig angeordneten Heizelementen wie zuvor beschrieben kombiniert werden kann, um eine Einstellung des Temperaturgradienten in beliebiger Weise zu ermöglichen.

Das ringförmig angeordnete Heizelement kann auch geteilt sein. So ist es möglich, lediglich den oberen Teil einzuschalten, wenn der Brennraum in Anpassung an die geringe Höhe von den Dentalrestaurationselementen verkleinert wird. In diesem Fall würde der Stempel bzw. die Aufnahmeplatte den unteren Teil des Heizelements abdecken, so dass eine Einschaltung des unteren Teils entbehrlich ist.

Es ist auch möglich, einen Stützkörper, der für die Aufnahme von Dentalrestaurationsteilen auf der Aufnahmeplatte vorgesehen ist, als Brenntisch auszubilden. Ein derartiger Brenntisch ist von einer Gabel einer Bestückungsvorrichtung unterfahrbar, so dass eine automatische Bestückung möglich ist.

Ein derartiger Brenntisch kann auch doppelstöckig ausgebildet sein, dergestalt, dass in einer ersten, der unteren Etage eine ringförmige Stützfläche ausgebildet ist, während sich ein Fuß des doppelstöckigen Brenntischs durch diese Fläche hindurch erstreckt und während auf der oberen Ebene eine ringförmige, beispielsweise eine kreisringförmige Fläche gebildet ist, auf welcher weitere Dentalrestaurationsteile aufgenommen sein können.

Die Erfindung ermöglicht es insbesondere im Vergleich mit dem Stand der Technik, die Gesamtprozesszeit deutlich zu verkürzen. Durch den kompakten Brennraum ist eine schnelle Aufheizung, aber bei Bedarf auch eine schnelle Abkühlung möglich. Bereits bei der Vorbereitung der Dentalrestaurationsteile für das Brennen kann das Heizelement als Energiequelle eingeschaltet werden. In dieser Situation deckt der Stempel und die Aufnahmeplatte die Durchtrittsausnehmung im Ofenkopf ab.

Eine Abdeckung kann oben an dem Ofenkopf angebracht sein. Diese Abdeckung kann für das schnelle Vorheizen während der Handhabung geöffnet sein, also beispielsweise zurückgeschoben, abgehoben oder weggeschwenkt. Es dann möglich, die Dentalrestaurationsteile auf die Aufnahmeplatte aufzubringen, während die Vorheizung des Brennraums bereits stattfindet. Durch den Stempel hin hindurch erfolgt eine leichte Aufwärmung der Aufnahmeplatte, so dass die Dentalrestaurationsteile auch bereits etwas vorgewärmt werden, beispielsweise auf eine Temperatur etwas oberhalb der Raumtemperatur.

Es liegt eine plane und recht große Handhabungsfläche vor. Die Aufnahmeplatte kann sich insofern bündig zur Oberseite des Ofenkopfes erstrecken. Die Dentalrestaurationsteile können auch seitlich der Aufnahmeplatte vorbereitet werden und dann kurzerhand zur Aufnahmeplatte verschoben werden.

Es ist auch möglich, eine Zwischenposition unterhalb der Präsentationsposition zu wählen, um eine schonende Vorheizung der Dentalrestaurationsteile zu ermöglichen. Innerhalb der oberen Ofenwand besteht ein Temperaturgradient, wobei die Brennkammer und die dort angrenzenden Bereiche heiß sind und das obere Ende des Ofenkopfes kalt oder zumindest im Wesentlichen auf Raumtemperatur. Durch Wahl der Höhe einer Zwischenposition der Aufnahmeplatte mit den Dentalrestaurationsteilen lässt sich die gewünschte Vorheiztemperatur in weiten Bereichen an die Erfordernisse anpassen.

Es versteht sich, dass während des Vorheizens eine Abdeckung des Ofenkopfes zweckmäßig geschlossen ist, um Energieverluste zu vermeiden. Nach Abschluss des Brennvorgangs kann in gleicher Weise eine Kühlung gesteuert vorgenommen werden, beispielsweise indem eine Zwischenposition zwischen der unten vorgesehenen Arbeitsposition und der oben vorgesehenen Präsentationsposition eingestellt wird. Auch hier lässt sich der bestehende Temperaturgradient günstig ausnutzen, indem der Stempel auf die Höhe mit der gewünschten Temperatur verfahren wird.

In weiterer vorteilhaften Ausgestaltung ist auch eine Wärmebildkamera vorgesehen, die beispielsweise an der Abdeckung angebracht sein kann oder an dem Deckel, und zwar dergestalt, also oberhalb des Deckels, dass sie durch ein entsprechend ausgebildetes Fenster in den Brennraum gerichtet ist, und die Temperatur der dort befindlichen Dentalrestaurationsteile unmittelbar erfassen kann.

Der erfindungsgemäße Öffnungs- und Schließmechanismus ist vergleichsweise preisgünstig zu realisieren, beispielsweise auch mit lediglich einem Motor. Ein entsprechendes Getriebe ermöglicht die gesteuerte Bewegung sowohl des Deckels als auch der Aufnahmeplatte, die auf dem Stempel ruht.

Erfindungsgemäß günstig ist es auch, dass die gesamte Ansteuerung sowohl des oder der Motoren als auch der Energiequelle nach unten verlagert werden können. Dies gilt dann auch für Kühlkörper der Leistungselektronik, die vergleichsweise weit unten angeordnet sein können, was die Kühleffizienz erhöht und auch den Schwerpunkt des erfindungsgemäßen Dentalbehandlungsgeräts nach unten verlagert.

In weiterer besonders vorteilhaften Ausgestaltung lässt sich der Arbeitsraum unter Unterdruck setzen, wobei es sich versteht, dass hierfür eine entsprechende Dichtung am Deckel oder am Stempel vorgesehen sein sollte. Es ist auch möglich, eine gesteuerte Luftbewegung in dem Arbeitsraum, der beispielsweise als Brennraum ausgebildet sein kann, zu realisieren. Beim Brennen entstehende Dämpfe des Dentalrestaurationselements lassen sich so absaugen.

Erfindungsgemäß günstig ist es auch, dass eine unmittelbare und daher schnell wirkende Regelung der Ofentemperatur möglich ist. Ein Temperatursensor kann entweder im Deckel vorgesehen sein, oder bei Bedarf auch unmittelbar angrenzend an die Aufnahmeplatte. In beiden Fällen lässt sich die Temperatur der Dentalrestaurationsteile kontinuierlich und exakt erfassen.

Bei Bedarf kann auch zusätzlich in der Seitenwand des Ofenkopfes ein weiteres Temperaturerfassungselement realisiert sein, das auch bei Anordnung der Aufnahmeplatte in der Präsentationsposition die Temperaturerfassung des Brennraums ermöglicht.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische Ansicht einer Ausführungsform eines erfindungsgemäß Dentalbehandlungsgerätes, in Form eines Dentalbrennofens, in zwei Zuständen;
- Fig. 2: der Dentalbrennofen gemäß Fig. 1, in drei weiteren Zuständen;
- Fig. 3: ein Schnitt durch einen erfindungsgemäßen Dentalbrennofens in einem ersten Zustand;
- Fig. 4: die Ausführungsform gemäß Fig. 3, jedoch in einem anderen Zustand;
- Fig. 5: die Ausführungsform gemäß den Figuren 3 und 4, jedoch in einem weiteren Zustand;
- Fig. 6 :: ein Schnitt durch eine weitere Ausführungsform eines erfindungsgemäßen Dentalbrennofens;
- Fig. 7a, 7b, 7c: Horizontalschnitte durch drei weitere Ausführungsformen eines erfindungsgemäßen Dentalbehandlungsgeräts;
- Figur 8a und 8b: schematische Darstellungen eines Details eines einer weiteren Ausführungsform des erfindungsgemäßen Dentalbehandlungsgeräts, in zwei Zuständen; und
- Fig. 9: eine weitere Ausführungsform des erfindungsgemäßen Dentalbehandlungsgeräts, in zwei Zuständen.

Der erfindungsgemäße Dentalbrennofen als Dentalbehandlungsgerät 10 weist einen Ofenkopf 12 auf, sowie eine Abdeckung 14, die relativ zu dem Ofenkopf 12 beweglich ist.

In dem Ofenkopf 12 ist in an sich bekannter Weise ein Arbeitsraum ausgebildet, der bei der beispielhaften der Realisierung des Dentalbehandlungsgerätes bzw. Wärmebehandlungsgerätes ein Brennraum ist.

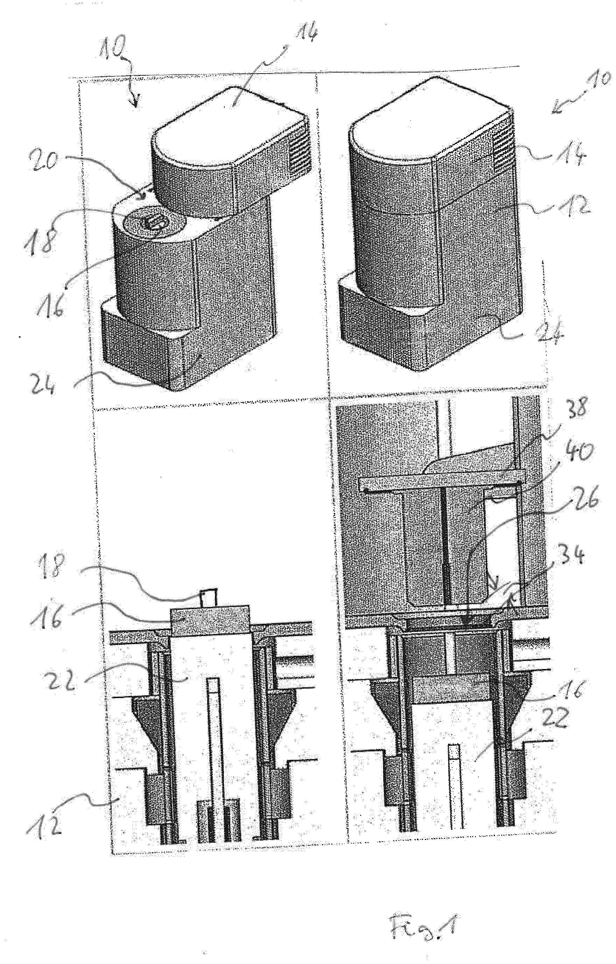

Der in Fig. 1 links dargestellte Zustand entspricht der Vorbereitung des Dentalbehandlungsgeräts. Die Abdeckung 14 ist offen, nämlich gegenüber dem Ofenkopf 12 in seitlicher Richtung verfahren, und bei dieser Ausführungsform zurückgezogen.

Eine Aufnahmeplatte 16 ist frei zugänglich und nimmt, wie aus Fig. 1 links ersichtlich ist, ein Dentalrestaurationsteil 18 auf.

Die Aufnahmeplatte 16 ist in dieser Ausführungsform etwa auf der Höhe der Oberseite 20 der Oberwand des Oberkopfes 12 angeordnet.

Gemäß der Darstellung in Fig. 1 links unten steht die Aufnahmeplatte 16 etwas gegenüber der Oberwand 20 vor. Es ist jedoch ohne weiteres auch möglich, eine bündige Anordnung zu wählen.

Die Aufnahmeplatte 16 liegt auf einem Stempel 22 auf, der sich von unten von dem Dentalbehandlungsgerät ausgehend nach oben erstreckt, in der dargestellten Position durch den Brennraum hindurch bis etwas unterhalb der Oberseite 20 des Ofenkopfs.

Im Fußbereich 24 des Dentalbehandlungsgeräts ist der entsprechend hierfür geeignete Antrieb des Stempels 22 vorgesehen.

Der Stempel 22 ist in dem dargestellten Ausführungsbeispiel massiv ausgebildet, mit einem Durchmesser, der etwa dem Durchmesser der Aufnahmeplatte 16 entspricht. Es versteht sich, dass es alternativ ohne weiteres auch möglich ist, einen kleineren Durchmesser für den Stempel 22 zu wählen. Auch kann die Achse und der Stempel mit Bohrungen bzw. einer Leitung für das Evakuieren oder Fluten des Arbeitsraumes mit einem Prozessgas ausgestaltet sein.

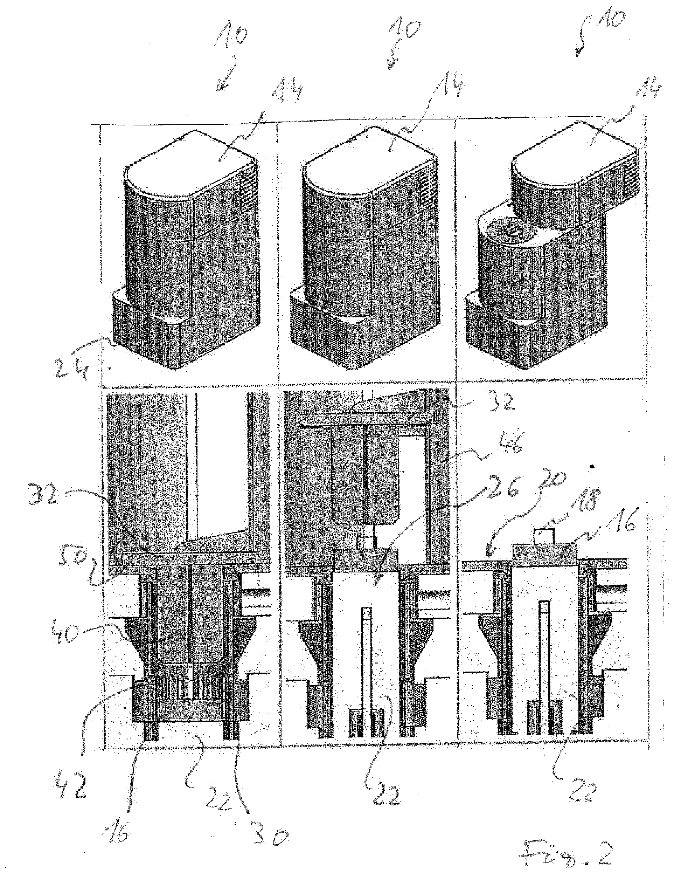

Der Ofenkopf 12 weist oben eine Durchtrittsausnehmung 26 auf. Diese ist so bemessen, dass sowohl der Stempel 22 als auch die Aufnahmeplatte 16 die Durchtrittsausnehmung 26 durchtreten kann. Im dargestellten Ausführungsbeispiel füllt der Stempel 22 die Durchtrittsausnehmung 26 aus. Er sperrt insofern den Wärmedurchtritt aus dem darunter befindlichen Brennraum 30 (vgl. Fig. 2) nach oben durch die Durchtrittsausnehmung 26 hindurch.

In dem dargestellten Ausführungsbeispiel ist auch die Aufnahmeplatte sowohl von unten, also von dem Brennraum aus, als auch von oben, also aus der in Fig. 1 links dargestellten Position, verfahrbar und in die Durchtrittsausnehmung hineinfahrbar.

Bei dieser Ausführungsform ist die Aufnahmeplatte 16 durch die Durchtrittsausnehmung 26 hindurchfahrbar.

Die Fig. 1 links dargestellte Position bietet eine freie Zugänglichkeit des Dentalrestaurationsteils 18 oben an dem Dentalbehandlungsgeräts 10. Insofern bildet diese Position eine Präsentationsposition.

Unterhalb der Präsentationsposition ist eine Arbeitsposition vorgesehen. In dieser ist der Stempel 22 soweit abgesenkt, dass die Aufnahmeplatte 16 sich in der Nähe des Brennraumbodens befindet und die Dentalrestaurationsteile 18 im Brennraum 30 gebrannt werden können.

Aus Fig. 1 links ist ersichtlich, in welcher Weise der Stempel 22 mit der Aufnahmeplatte 16 abgesenkt werden kann. In der in Fig. 1 dargestellten Position taucht der Stempel 22 teilweise in die Durchtrittsausnehmung 26 ein. Ein Deckel 32 nähert sich von oben der Durchtrittsausnehmung 26. In dieser Position verbleibt jedoch ein Spalt 34 zwischen dem Deckel 32 und der Durchtrittsausnehmung 26. Jedoch ist die Aufnahmeplatte 16 von dem bereits warmen Ofenkopf 12 umgeben, so dass die dort befindlichen Dentalrestauration vorgewärmt oder beispielsweise getrocknet werden.

In dem dargestellten Ausführungsbeispiel besteht der Deckel 32 aus einem Flansch 38 und einem Zapfen 40. Der Zapfen 40 kann sich in die Durchtrittsausnehmung 26 erstrecken, während der Flansch 38 auf der Oberseite 20 des Oberkopfes 12 aufliegen kann. Diese Position ist aus Fig. 2 links ersichtlich. Der Zapfen 40 besteht aus einem wärmedämmenden Material und verschließt den Ofenkopf 12 oben.

Demgegenüber ist in Fig. 2 links die Arbeitsposition dargestellt. In dieser erstreckt sich die Aufnahmeplatte 16 von dem Deckel 32 um eine Höhe beabstandet, die der maximalen Höhe der Dentalrestaurationsteile entspricht. Der Brennraum 30 ist bewusst klein gehalten.

In erfindungsgemäß bevorzugter Ausgestaltung ist es vorgesehen, den Brennraum 30 hinsichtlich seiner Höhe an die Erfordernisse anzupassen. Hierzu wird die Aufnahmeplatte 16 soweit verfahren, dass die Höhe des Brennraums 30 in Anpassung an die Dentalrestaurationsteile gewählt wird. Beispielsweise kann die Höhe des Brennraums 30 das eineinhalbfache bis das Dreifache der Höhe der Dentalrestaurationsteile betragen.

Bei der Ausführungsform gemäß Fig. 1 und 2 ist der Brennraum 30 von einem Zylinderelement 42 umgeben. Dieses erstreckt sich zwischen Heizelementen 44 und dem Brennraum 30 und dient der Vergleichmäßigung der Wärmeabgabe und zugleich dem Schutz der Heizelemente 44 vor Beschädigungen.

Wie aus dem Vergleich der Fig. 1 und 2 ebenfalls ersichtlich ist, ist der Deckel 32 vertikal verfahrbar. Dies geschieht über einen Deckelantrieb 46, der in der Abdeckung 14 aufgenommen und von dieser abgedeckt ist.

In dargestelltem Ausführungsbeispiel ist der Deckelantrieb 46 von dem Antrieb des Stempel 22 entkoppelt, um die Brennraumhöhe einstellen zu können. Es ist jedoch auch möglich, mit einem konstant hohen Brennraum zu arbeiten und Deckelantrieb und Stempelantrieb elektrisch oder mechanisch über ein Getriebe, einer Übersetzung oder eine Spindel zu koppeln. Auch können mit dieser Koppelung Deckelantrieb und Stempel beispielsweise bei einer entsprechenden Auslegung mit einem Motor 2 unterschiedliche aber korrelierende Bewegungsgeschwindigkeiten für Stempel und Deckel realisiert werden.

In der in Fig. 2 dargestellten linken Position, der Arbeitsposition, erfolgt das Brennen des Dentalrestaurationsteils durch Einschalten des Heizelements 44. In dieser Position ist der Deckel 32 auf die Oberseite 20 des Ofenkopfs 12 aufgelegt und dichtet über eine Dichtung 50 dort ab. Eine entsprechende Abdichtung ist unten an dem Stempel 22 vorgesehen. Damit ist es möglich, den Brennraum 30 in der Arbeitsposition und beispielsweise unter Unterdruck zu setzen. Beispielsweise ist es möglich, anschließend, den Brennraum 30 mit Sauerstoff, Stickstoff, Argon oder einem anderen Prozessgas zu spülen bzw. das Prozessgas auszutauschen oder mit einem unter Überdruck eingebrachtem Prozessgas zu arbeiten.

In der in Fig. 2 mittig dargestellten Position ist der Deckel 32 von der Durchtrittsausnehmung 26 abgehoben und die Aufnahmeplatte 16 in die obere Position verfahren. In dieser Position dichtet der Stempel 22 die Durchtrittsausnehmung 26 nach oben ab. Die Dentalrestaurationsteile 18 sind im Innenraum der Abdeckung 14 von der dort befindlichen Luft umgeben und kühlen bereits etwas ab.

Wenn die Abkühlphase abgeschlossen ist, erfolgt ein Zurückziehen der Abdeckung 14 gemäß der in Fig. 2 rechts dargestellten Stellung. In dieser ist der Deckel 32 samt der Abdeckung 14 seitlich verfahren, so dass die Dentalrestaurationsteile in der Präsentationsposition frei und offen zugänglich zu liegen kommen und für die Entnahme bereit sind.

Auch in dieser Position dichtet der Stempel 22 gegenüber dem heißen Ofenkopf 12 ab, so dass der Ofenkopf auch in dieser Position nicht auskühlt.

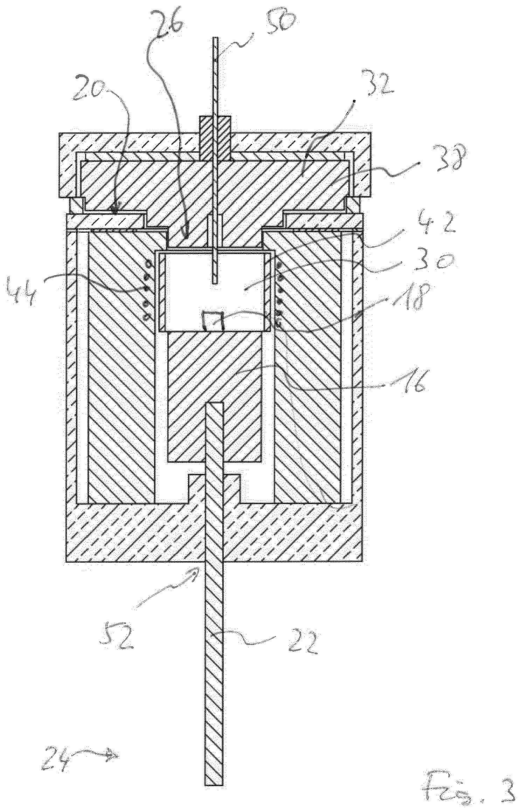

Eine weitere Ausgestaltung des erfindungsgemäßen Dentalbehandlungsgeräts 10 ist aus den Fig. 3 bis 6 ersichtlich.

In der Position gemäß Fig. 3, der Arbeitsposition, liegt der Deckel 32 auf der Oberseite 20 des Ofenkopfs 12 auf. Der Flansch 38 liegt dort die Durchtrittsausnehmung 26 umgebend auf, und der Zapfen 40 ragt in die Durchtrittsausnehmung 26 hinein.

In dieser Ausführungsform ist ein Temperatursensor 50 vorgesehen, der den Deckel 32 durchtritt und in den Brennraum 30 hineinragt.

In dieser Ausführungsform ist ferner die Aufnahmeplatte 16 nach der Art eines Zylinders ausgebildet, mit einer Höhe, die etwa dem doppelten Durchmesser entspricht. Auch eine derartige vergleichsweise hohe Ausgestaltung sei hier von dem Begriff Aufnahmeplatte 16 mit umfasst.

Der Stempel 22 trägt und führt die Aufnahmeplatte 16, wobei er in die Aufnahmeplatte 16 von unten hineinragt. Er durchtritt den Ofenkopf 12 an einer Stempelführung 52, wobei unterhalb dieser im Fußbereich 24 der nicht dargestellte Stempelantrieb vorgesehen ist.

Ein Zylinderelement 42 als Schutzelement ist in dem dargestellten Ausführungsbeispiel als Suszeptor vorgesehen und dient der Vergleichmäßigung der eingeleiteten Wärmeenergie. Eine Induktionsspule zur induktiven Erwärmung erstreckt sich ringförmig um den Suszeptors bzw. das Zylinderelement 42. Das Zylinderelement 42 kann aber auch ein direkt elektrisch beheiztes Widerstandselement sein. Auf der Oberseite der Aufnahmeplatte 16 ist das Dentalrestaurationsteil 18 aufgenommen und abgestellt. In dieser Position ist die wirksame Höhe des Deckels 32 so gewählt, dass eine gute Wärmedämmung vorliegt, die in etwa der Wärmedämmung der Seitenwände des Ofenkopfes 12 entspricht. Dies kann in an sich bekannter Weise beispielsweise über entsprechend geformte Schamott- bzw. Wärmedämm-Formstücke realisiert sein.

In dem dargestellten Ausführungsbeispiel ist der Brennraum zylindrisch und hat einen Durchmesser von 60 mm, entsprechend dem Innendurchmesser des Zylinderelements 42. Die eingestellte Höhe beträgt hier 32 mm, wobei diese wiederum durch die vertikale Verfahrbarkeit der Aufnahmeplatte 16 einstellbar ist.

Hierzu ist es auch möglich, das Zylinderelement 42 und das Heizelement 44 bei Bedarf nach unten zu verlängern.

Es ist auch möglich, das Heizelement 44 separat einschaltbar zu gestalten. Bei dieser Ausführungsform wird lediglich der in Fig. 3 dargestellte obere Teil immer eingeschaltet und der hier nicht dargestellte untere Teil lediglich dann, wenn die größere Höhe des Dentalrestaurationsteils 18 und die entsprechende Absenkung der Aufnahmeplatte 16 dies erfordert.

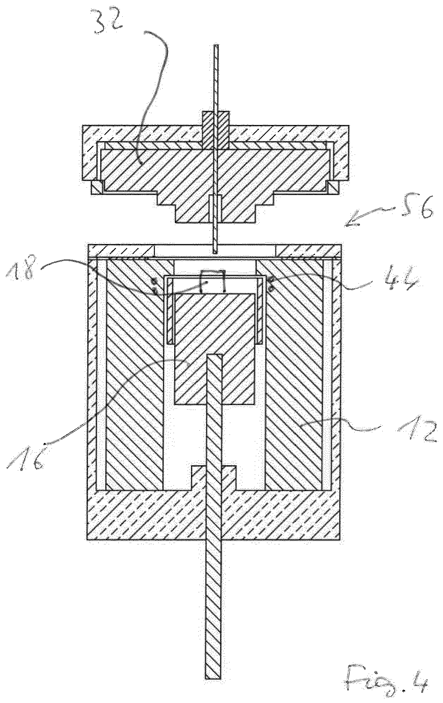

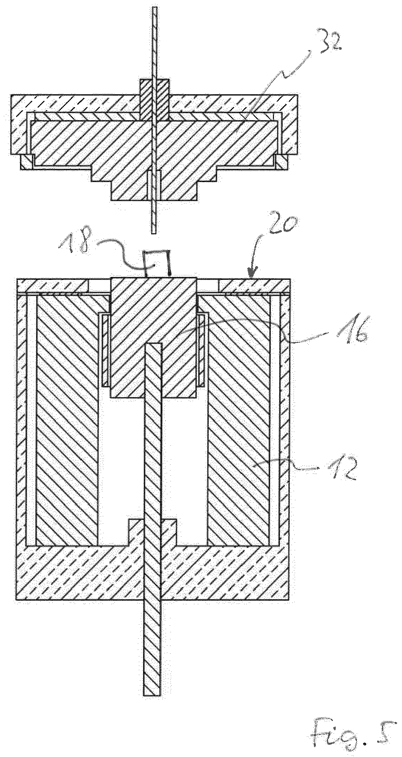

Aus Fig. 4 ist in eine Zwischenposition zwischen der in Fig. 3 dargestellten Arbeitsposition und der in Fig. 5 dargestellten Präsentationsposition ersichtlich. In dieser Zwischenposition ist sowohl ein Vorwärmen möglich, nachdem die Heizelemente 44, die die Dentalrestaurationsteile 18 bereits umgeben, als auch ein langsames Abkühlen nach Abschluss des Brennzyklus. In dieser Position ist der Deckel 32 abgehoben, so dass ein Spalt 56 zwischen dem Ofenkopf 12 und dem Deckel 32 besteht.

Es besteht auch die Möglichkeit zuerst den Deckel abzuheben und anschließend daran den Stempel nach oben zu fahren.

In Fig. 5 ist die Präsentationsposition ersichtlich. Die Aufnahmeplatte 16 erstreckt sich mit Ihrer Oberseite bündig zur Oberseite 20 des Ofenkopfs 12, und der Deckel 32 ist deutlich weiter angehoben.

Alternativ ist es auch möglich, den Deckel 32 zusätzlich seitlich zu verfahren, um die Zugänglichkeit weiter zu verbessern.

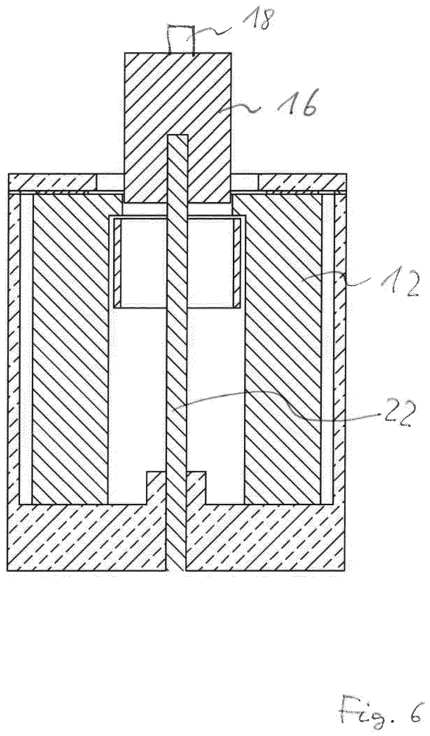

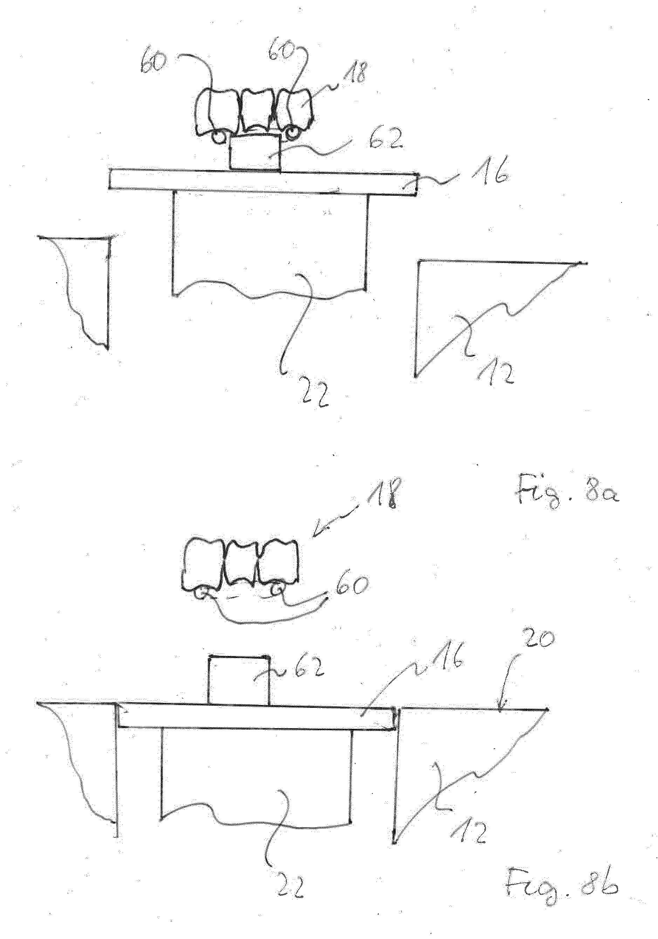

Aus Fig. 6 ist ersichtlich, in welcher Weise eine noch weiter erhöhte Präsentationsposition realisiert werden kann. Diese Position ist beispielsweise besonders günstig, wenn eine automatische Bestückung und Entstückung erwünscht ist. Eine solche Möglichkeit ist aus den Figuren 8a und 8b schematisch ersichtlich. Durch Zusammenwirkung einer Bestückungsgabel mit dem Stempelantrieb lässt sich ein Dentalrestaurationsteil auf der Aufnahmeplatte 16 abstellen, aber auch von diesem entnehmen.

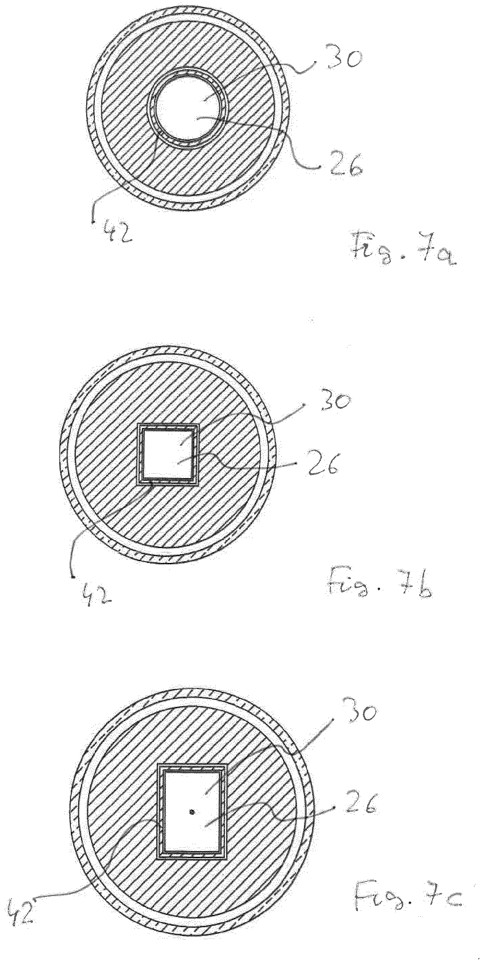

Aus Fig. 7a ist eine beispielhaft mögliche Form der Aufnahmeplatte 16 und des Brennraums 30 ersichtlich. In dieser Ausführungsform sind diese kreisförmig.

Demgegenüber ist bei der Ausführungsform gemäß Fig. 7b der Brennraum 30, die Aufnahmeplatte 16 und das Zylinderelement 42 mit einem quadratischen Querschnitt vorgesehen, und gemäß Fig. 7c einem rechteckigen Querschnitt.

Diese Ausgestaltungen sind lediglich beispielhaft zu verstehen, auch eine beliebige andere Form des Brennraums 30 und der zugehörigen hier genannten Teile ist möglich, ohne den Bereich der Erfindung zu verlassen.

Bevorzugt ist die Außenform des Ofenkopfs 16 gemäß Fig. 1 mindestens teilweise rund oder gemäß den Figuren 7a-7c kreisrund. Bei einem rechteckig ausgestalteten Brennraum bietet es sich aber auch an, die Außenkonturen entsprechend rechteckig zu gestalten um die Komplexität der Bauteile zu reduzieren und um beispielsweise die Wärmedämmung des Brennraum mit Plattenmaterial zu realisieren.

Aus Fig. 8a ist ersichtlich, in welcher Weise eine automatische Bestückung und Entstückung eines erfindungsgemäßen Dentalbehandlungsgeräts möglich ist. Der Stempel 22 mit der Aufnahmeplatte 16 befindet sich in der oberen Position, der Präsentationsposition. Das Dentalrestaurationsteil 18 ist von einer Gabel 60 der Beschickungsvorrichtung untergriffen. Das Dentalrestaurationsteil stützt sich hier auf der Gabel 60 ab, aber auch noch zusätzlich auf einem Stützkörper 62, der auf der Aufnahmeplatte 16 aufliegt und einen kleineren Durchmesser als der Abstand der Gabelzinken hat.

Demgegenüber ist gemäß Fig. 8b der Stempel 22 mit der Aufnahmeplatte 16 nach unten verfahren. Der Stützkörper 62 verbleibt auf der Aufnahmeplatte 16, aber hat keinen Kontakt mehr mit den Dentalrestaurationsteilen 16, die nunmehr ausschließlich auf der Gabel 60 aufliegen und seitlich verfahren werden können. Die Gabel 60 ist seitlich verfahrbar.

Erfindungsgemäß ist es bevorzugt, dass die Bestückung und Entstückung bei dieser Ausführungsform automatisch erfolgen kann.

In einer weiteren nicht zeichnerisch dargestellten Ausführungsform ist es vorgesehen, dass der Deckel 32 über Standbeine auf der Aufnahmeplatte 16 abgestützt ist. Diese vereinfachte Ausgestaltung macht einen separaten Deckelantrieb entbehrlich, hat jedoch den Nachteil, dass die Höhe des Brennraums nicht oder nur durch Ändern der Länge der Stützbeine, durch Austauschen dieser, geändert werden kann.

In einer weiteren Ausgestaltung ist es vorgesehen, die Aufnahmeplatte nicht plan, sondern formgebunden zu realisieren. Dies kann beispielsweise durch einen Stützkörper gemäß den Figuren 8a und 8b realisiert sein, oder aber durch entsprechende Erhebungen. Alternativ können auch Vertiefungen vorgesehen sein, die dann die Dentalrestaurationsteile, gegebenenfalls auf einen speziellen Brennteller, aufnehmen können.

Ferner ist es auch möglich, die Aufnahmeplatte mit einem Drehteller auszurüsten. Ein solcher Drehteller kann Vorteile hinsichtlich der Vergleichmäßigung der Erwärmung haben. Dies kann beispielsweise vorteilhaft bei Einsatz einer Mikrowellenheizung sein oder aber, wenn beispielsweise eine (IR) Kamera alle Objekte erfassen soll. Dabei können die Objekte an einer ortsfesten beispielsweise außen am Deckel 32 an einem Sichtfenster angebrachten Kamera vorbei gedreht werden.

Der Antrieb des Stempels 22 kann in beliebiger geeigneter Weise vorgesehen sein, beispielsweise elektrisch, mechanisch durch einen manuell zu bedienenden Hubhebel oder pneumatisch oder hydraulisch. Bevorzugt ist er von dem Deckelantrieb 46 entkoppelt.

Die Abdeckung 14 lässt sich bevorzugt manuell nach hinten und nach vorne schieben, es ist aber auch eine motorische Verfahrbarkeit realisierbar.

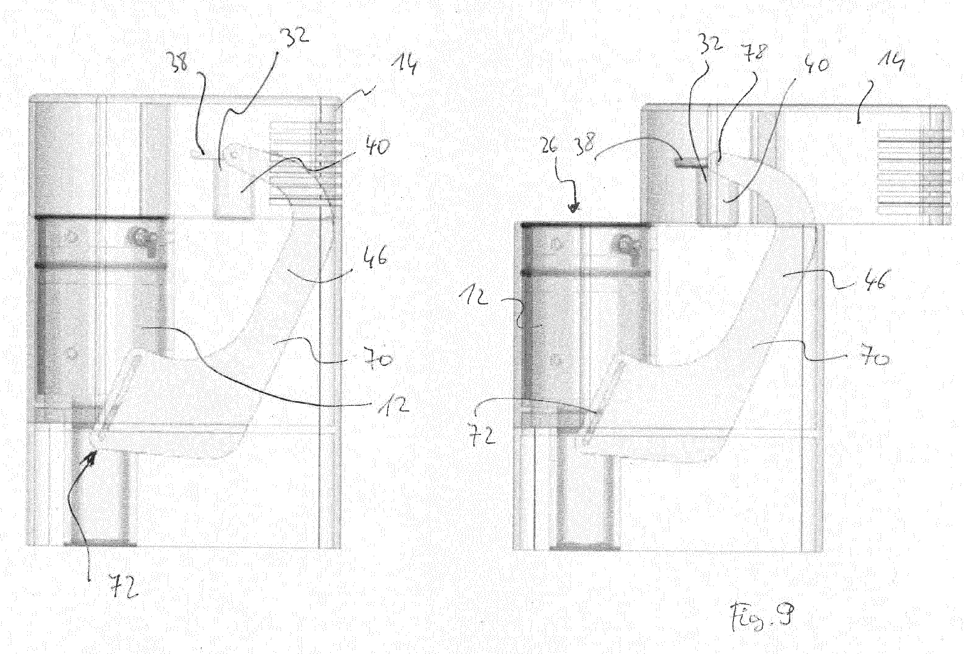

Eine weitere Ausführungsform eines erfindungsgemäßen Dentalbrennofens ist aus Fig. 9 schematisch ersichtlich. Dort ist der erfindungsgemäße Dentalbrennofen in Seitenansicht gleichsam halbdurchsichtig dargestellt. Ein Deckel 32 besteht aus einem Flansch 38 und einem Zapfen 40, der dazu bestimmt ist, in eine Durchtrittsausnehmung 26 in dem Ofenkopf 12 einzutreten.

Bei dieser Ausführungsform ist ein besonders gestalteter Deckelantrieb 46 vorgesehen. Der Deckelantrieb 46 weist einen Schwenkarm 70 auf, der zusätzlich ein Vertikallager 72 aufweist. Das Vertikallager 72 erlaubt es, den Schwenkarm 70 nach oben und nach unten zu verfahren, und zwar bevorzugt schräg, also in einer Richtung parallel zu dem Schwenkarm 70. Zudem ist es möglich, den Schwenkarm 70 um einen Lagerpunkt 74 zu schwenken.

Der Schwenkarm 70 trägt an seinem oberen Ende an einem Schwenklager 78 für den Deckel 32. In der Darstellung gemäß Fig. 9 ist der Deckel 32 in der geöffneten Stellung, gibt also die Durchtrittsausnehmung 26 des Ofenkopfes frei.

Für das Verschließen der Durchtrittsausnehmung 26 lässt sich der Schwenkarm 70 um den Lagerpunkt 46 dergestalt verschwenken, dass der Deckel 32 oberhalb der Durchtrittsausnehmung 26 hängt und in diese mit dem Zapfen 40 versenkt wird, indem der Schwenkarm insgesamt an dem Vertikallager 72 nach unten abgesenkt wird.

In der in Fig. 9 dargestellten offenen Position des Deckels 32 lässt sich die Abdeckung 14 sowohl in die offene Stellung gemäß der rechten Darstellung als auch in die geschlossene Stellung gemäß der linken Darstellung verfahren. In der rechten Darstellung, also bei zurückgeschobener Abdeckung, lässt sich die nicht dargestellte Aufnahmeplatte 16 mit dem Dentalrestaurationsteil nach oben hin in die Präsentationsposition fahren.

In der Präsentationsposition ragen mindestens die Dentalrestaurationsteile so aus dem Ofenkopf 12 heraus, dass sie ohne weiteres von der Aufnahmeplatte 16 entfernbar sind, und neue Dentalrestaurationsteile auf die Aufnahmeplatte 16 aufgebaut werden können.

## Patentansprüche

1. Dentalbehandlungsgerät, mit einer Energiequelle, die mindestens teilweise in oder an einem Arbeitsraum (30) für die Behandlung eines Dentalrestaurationsteils (18) angeordnet ist, mit einem gegenüber dem Dentalbehandlungsgerät im Übrigen beweglichen Stempel (22) mit einer Aufnahmeplatte (16) für Dentalrestaurationsteile, wobei der Arbeitsraum (30) oben eine Durchtrittsausnehmung (26) aufweist, und wobei ein Deckel (32) an dem Dentalbehandlungsgerät gelagert und/oder angelenkt ist, mit welchem die Durchtrittsausnehmung (26) und/oder der Arbeitsraum (30) verschließbar Ist, **dadurch gekennzeichnet, dass** die Aufnahmeplatte (16) mindestens teilweise in die Durchtrittsausnehmung (26) hineinfahrbar Ist, und dass ein Antrieb für das Überführen des Stempels von mindestens einer Arbeitsposition in mindestens eine Präsentationsposition, welche oberhalb der Durchtrittsausnehmung (26) ist, und zurück, vorgesehen ist.

2. Dentalbehandlungsgerät nach Anspruch 1, **dadurch gekennzeichnet, dass** der Stempel (22) mit der Aufnahmeplatte (16) von unten bis oben durch den Arbeltsraum (30) hindurch anhebbar, insbesondere darüber hinaus anhebbar, und durch diesen hindurch absenkbar ist.

3. Dentalbehandlungsgerät nach Anspruch 1 und 2, **dadurch gekennzeichnet, dass** der Stempel (22) durch die Durchtrittsausnehmung (26) hindurch nach oben verfahrbar ist, bis zu einer Präsentationsposition, in welcher die Dentalrestaurationstelle (18) auf die Aufnahmeplatte (16), direkt oder über zusätzliche Träger, automatisch durch eine Steuervorrichtung gesteuert, maschinell also motorisch oder manuell aufbringbar und/oder von dieser entfernbar sind.

4. Dentalbehandlungsgerät nach einem der vorhergehenden Ansprüche, **dadurch gekennzeichnet, dass** in der Präsentationsposition der Stempel (22) die Durchtrittsausnehmung (26)unter Belassung eines Spalts für ein seitliches Bewegungsspiel verschließt, wobei der Stempel (22) und/oder die Aufnahmeplatte (16) und/oder die Durchtrittsausnehmung (26) kreisrund oder quadratisch oder oval oder rechteckig oder mehr, gegebenenfalls auch mit abgerundeten Ecken, ausgebildet sind.

5. Dentalbehandlungsgerät nach einem der vorhergehenden Ansprüche, **dadurch gekennzeichnet, dass** der Deckel (32) mit dem Stempel (22) verbunden ist und beim Absenken der Aufnahmeplatte (16) in die Arbeitsposition die Durchtrittsausnehmung (26) und/oder den Arbeitsraum (30) verschließt.

6. Dentalbehandlungsgerät nach einem der vorhergehenden Ansprüche, **dadurch gekennzeichnet, dass** der Deckel (32) einen Deckelantrieb (46) aufweist, über welchen er gegenüber von der Durchtrittsausnehmung (26) abhebbar und hieran anschließend im Wesentlichen horizontal, vertikal oder schräg nach oben wegschwenkbar oder wegbewegbar ist,, wobei über den Deckelantrieb, insbesondere durch Festlegen des aktuellen Abstands des Deckels (32) von der Durchtrittsausnehmung (26), ein Abkühlgradient des Dentalbehandlungsgeräts steuerbar Ist.

7. Dentalbehandlungsgerät nach einem der vorhergehenden Ansprüche, **dadurch gekennzeichnet, dass** in der Präsentationsposition die Aufnahmeplatte (16) Im Wesentlichen bündig mit der Oberseite (20) der Oberwand des Arbeitsraums oder darüber ist.

8. Dentalbehandlungsgerät nach einem der vorhergehenden Ansprüche, **dadurch gekennzeichnet, dass** der Arbeitsraum (30) ein Zylinderelement (40) aufweist, welches sich mindestens teilweise zwischen der Aufnahmeplatte (16) und der Energiequelle erstreckt, wobei das Dentalbehandlungsgerät als Sinterofen, Pressofen oder Brennofen, die Energiequelle als Heizelement, und der Arbeitsraum als Brennraum (30) oder Pressraum ausgebildet ist.

9. Dentalbehandlungsgerät nach einem der vorhergehenden Ansprüche, **dadurch gekennzeichnet, dass** ein den Arbeitsraum umgebendes oder an dessen Außenumfang angeordentes kreisringförmiges Ringelement (40), In vertikaler Richtung betrachtet geteilter Form, als Energiequellenelement dient, wobei dieses als Induktionsheizelement - bei Bedarf mit einem Suszeptor -, als Infrarotheizelement, als elektrische Widerstandsheizung, insbesondere mit Molybdändisilizid, Siliziumkarbid, oder Heizleiter, als durch Mikrowellen beheizt oder als eine beliebige andere Energiequelle ausgebildet ist, oder dass das Energiequellenelement als Belichtungseinheit oder als eine Kombination einer Belichtungseinheit mit einem Heizelement ausgebildet ist.

10. Dentalbehandlungsgerät nach einem der vorhergehenden Ansprüche, **dadurch gekennzeichnet, dass** mindestens ein Teil des Energiequellenelements (44) an der Aufnahmeplatte (16), zur Erwärmung und/oder Belichtung von Dentalrestaurationsteilen (18) von unten, und/oder an der Oberwand des Arbeitsraums (30), zur Erwärmung und/oder Belichtung von Dentalrestaratlonsteilen (18) von oben angeordnet ist.

11. Dentalbehandlungsgerät nach einem der vorhergehenden Ansprüche, **dadurch gekennzeichnet, dass** der Arbeltsraum (30) im Wesentlichen zylindrisch mit einem Durchmesser zwischen 42 mm und 120 mm und einer Höhe zwischen 22 mm und 100 mm, insbesondere mit einem Durchmesser zwischen 50 mm und 70 mm und einer Höhe zwischen 30 mm und 50 mm, ausgebildet ist.

12. Dentalbehandlungsgerät nach einem der vorhergehenden Ansprüche, **dadurch gekennzeichnet, dass** der Arbeltsraum (30) bei Ausbildung als Brennraum, in seiner Größe, Insbesondere in seiner Höhe, in Anpassung an die Erfordernisse wie die Größe der zu behandelnden Dentalrestaurationsteile, in der Arbeitsposition veränderbar ist, insbesondere durch vertikale Bewegung des Stempels (22) mit der Aufnahmeplatte (16).

13. Dentalbehandlungsgerät nach einem der vorhergehenden Ansprüche, **dadurch gekennzeichnet, dass** der Arbeitsraum (30) nach außen abgedichtet ist und dass eine Druckquelle für den Arbeltsraum (30) vorgesehen ist, mit weichem dieser unter Überdruck oder unter Unterdruck versetzbar ist, wobei der Stempel eine Leitung aufweist, die mit der Druckquelle In Verbindung steht und für das Evakuieren und Fluten des Arbeitsraums (30) bestimmt ist.

14. Dentalbehandlungsgerät nach einem der vorhergehenden Ansprüche, **dadurch gekennzeichnet, dass** die Aufnahmeplatte (16) einen Drehteller und/oder Vertiefungen aufweist, wobei die Präsentationsposition oberhalb der Durchtrittsausnehmung (26) um das bis das fünffache des Durchmessers der Aufnahmeplatte ist.

15. Dentalbehandlungsgerät nach einem der vorhergehenden Ansprüche, **dadurch gekennzeichnet, dass** in dem Arbeitsraum (30) eine Waage angeordnet ist, auf welche Dentalrestaurationsteile (18) aufbringbar sind, wobei das von der Waage gemessene Gewicht nach Übertragen zum Dentalbehandlungsgerät (10) an diesem angezeigt Ist.

## Claims

1. A dental treatment device, having an energy source which is arranged at least partially in or on a working space (30) for treatment of a dental restoration part (18), comprising a stamp (22) which, relative to the dental treatment device, is otherwise movable, having a receiving plate (16) for dental restoration parts, the working space (30) having a passage recess (26) at the top, and a lid (32) being mounted and/or articulated on the dental treatment device, with which lid the passage recess (26) and/or the working space (30) is closeable,
**characterized in that** the receiving plate (16) is at least partially displaceable into the passage recess (26), and **in that** a drive is provided for transferring the stamp from and to at least one working position Into at least one presentation position which is above the passage recess (26).

2. The dental treatment device according to claim 1, **characterized in that** the stamp (22) including the receiving plate (16) is able to be lifted across the working space (30) from the bottom to the top, and especially lifted beyond it, and lowered across the working space (30).

3. The dental treatment device according to claims 1 and 2, **characterized in that** the stamp (22) can be travelled upwards through the passage recess (26) up to a presentation position, wherein the dental restoration parts (18) are applicable onto and/or are removable from the receiving plate (16), directly or via additional carriers, automatically controlled by a control device, i.e. can be applied and/or removed from the receiving plate (16) mechanically, i.e. by motor or manually.

4. The dental treatment device according to one of the preceding claims, **characterized in that**, In the presentation position, the stamp (22) closes the passage recess (26) while leaving a gap for creating a lateral play of movement, the stamp (22) and/or the receiving plate (16) and/or the passage recess (26) being circular or square or oval or rectangular or more, optionally In addition having rounded corners.

5. The dental treatment device according to one of the preceding claims, **characterized in that** the lid (32) is connected to the stamp (22) and closes the passage recess (26) and/or the working space (30) when lowering the receiving plate (16) to the working position.

6. The dental treatment device according to one of the preceding claims, **characterized in that** the lid (32) comprises a lid drive (46) by which it is liftable In relation to the passage recess (26) and subsequently can be pivoted or moved away substantially horizontally, vertically or obliquely upwards, wherein a cooling gradient of the dental treatment device is controllable via the lid drive, especially by predetermining the actual distance of the lid (32) from the passage recess (26).

7. The dental treatment device according to one of the preceding claims, **characterized in that**, in the presentation position, the receiving plate (16) is located substantially flush with or above the top surface (20) of the upper wall of the working space.

8. The dental treatment device according to one of the preceding claims, **characterized in that** the working space (30) comprises a cylinder element (40) which extends at least partially between the receiving plate (16) and the energy source, the dental treatment device being in the form of a sintering furnace, press furnace or kiln, the energy source is designed as a heating element, and the working chamber Is designed as a firing chamber (30) or a press chamber.

9. The dental treatment device according to one of the preceding claims, **characterized in that** a circular ring element (40), which surrounds the working space or is arranged on Its outer circumference, serves as an energy source element in a divided form, as viewed in the vertical direction, this energy source element being formed as an induction heating element - comprising a susceptor, if required -, as an infrared heating element, as an electrical resistance heating element, especially including molybdenum disilicide, silicon carbide, or heating conductor, heated by microwaves or being formed as any other energy source, or **In that** the energy source element Is designed as a light exposing unit or as a combination of a light exposing unit and a heating element.

10. The dental treatment device according to one of the preceding claims, **characterized in that** at least one part of the energy source element (44) is arranged on the receiving plate (16) for heating and/or exposing dental restoration parts (18) from below and/or on the upper wall of the working space (30) for heating and/or exposing dental restoration parts (18) from above.

11. The dental treatment device according to one of the previous claims, **characterized in that** the working space (30) is substantially cylindrical having a diameter between 42 mm and 120 mm and a height between 22 mm and 100 mm, especially with a diameter between 50 mm and 70 mm and a height between 30 mm and 50 mm.

12. The dental treatment equipment according to one of the preceding claims, **characterized In that** the working space (30) when being formed as a firing chamber, can be changed in its size, especially In its height, in adaptation to the requirements such as the size of the dental restoration site to be treated, and thus can be changed in its working position, especially by vertical movement of the stamp (22) including the receiving plate (16).

13. The dental treatment device according to one of the preceding claims, **characterized in that** the working space (30) is sealed to the outside and **in that** a pressure source is provided for the working space (30) with which it can be displaced under overpressure or under vacuum, the stamp comprising a conduct which communicates with the pressure source and is for evacuating and flooding the working space (30).

14. The dental treatment device according to one of the preceding claims, **characterized in that** the receiving plate (16) comprises a rotary plate and/or recesses, the presentation position above the passage recess (26) being up to five times the diameter of the receiving plate.

15. The dental treatment device according to one of the preceding claims, **characterized In that** a balance to which dental restoration parts (18) can be applied is arranged in the working space (30), the weight measured by the balance being displayed on the dental treatment device (10) after being transferred to the dental treatment device (10).

## Revendications

1. Dispositif de traitement dentaire, avec une source d'énergie, qui est disposée au moins partiellement dans ou contre une zone de travail (30) pour le traitement d'une pièce de restauration dentaire (18), avec en face l'appareil de traitement dentaire un tampon mobile (22) avec un plateau de réception (16) pour les pièces de restauration dentaire, où la zone de travail (30) présente une cavité de passage (26) en haut, et où un couvercle (32) est monté sur le dispositif de traitement dentaire et/ou y est articulé, avec lequel la cavité de passage (26) et/ou l'espace de travail (30) peut être obturé, **caractérisée en ce que** le plateau de réception (16) peut-être déplacé dans la cavité de passage (26) au moins partiellement et qu'un dispositif d'entraînement est fourni pour le transfert du tampon en avant et en arrière entre au moins une position de travail et au moins une position de présentation, qui est au-dessus de la cavité de passage (26).

2. Dispositif de traitement dentaire selon la revendication 1, **caractérisé en ce que** le tampon (22) avec le plateau de réception (16) peut être soulevé de bas en haut à travers la zone de travail (30), en particulier peut être soulevé au-delà de ce celle-ci, et peut être abaissé à travers celle-ci.

3. Dispositif de traitement dentaire selon les revendications 1 et 2, **caractérisé en ce que** le tampon (22) peut être déplacé vers le haut à travers la cavité de passage (26) jusqu'à une position de présentation, dans laquelle les pièces de restauration dentaire (18) peuvent être attachées mécaniquement, c'est-à-dire avec un moteur ou manuellement, au plateau de réception (16) et/ou enlevées de celui-ci, directement ou par l'intermédiaire de plateaux supplémentaires, contrôlées automatiquement par un dispositif de commande.

4. Dispositif de traitement dentaire selon l'une des revendications précédentes, **caractérisé en ce qu'**en position de présentation le tampon (22) obture la cavité de passage (26) laissant une fente pour un jeu de mouvement latéral, où le tampon (22) et/ou le plateau de réception (16) et/ou la cavité de passage (26) sont configurés ronds ou carrées ou ovales ou rectangulaires ou éventuellement aussi avec des coins arrondis.

5. Dispositif de traitement dentaire selon l'une des revendications précédentes, **caractérisé en ce que** le couvercle (32) est relié au tampon (22) et lors de l'abaissement du plateau de réception (16) dans la position de travail, la cavité de passage (26) et/ou l'espace de travail (30) est fermé.

6. Dispositif de traitement dentaire selon l'une des revendications précédentes, **caractérisé en ce que** le couvercle (32) a un dispositif d'entraînement de couvercle (46) par lequel Il peut être soulevé en face de la cavité de passage (26) et ainsi par la suite peut être pivoté ou déplacé essentiellement verticalement ou incliné vers le haut, où par l'intermédiaire du dispositif d'entraînement de couvercle, en particulier en fixant la distance du couvercle (32) à un moment donné de la cavité de passage (26), un gradient de refroidissement du dispositif de traitement dentaire peut être contrôlé.

7. Dispositif de traitement dentaire selon l'une des revendications précédentes, caractérisé en ce la position de présentation du plateau de réception (16) est sensiblement à fleur avec la face supérieure (20) de la paroi supérieure de la zone de travail ou au-dessus de celle-ci.

8. Dispositif de traitement dentaire selon l'une des revendications précédentes, **caractérisé en ce que** la zone de travail (30) présente un élément de cylindre (40) qui s'étend au moins partiellement entre le plateau de réception (16) et la source d'énergie, **caractérisé en ce que** le dispositif de traitement dentaire est configuré comme four de frittage, four de pressée ou four, la source d'énergie comme élément de chauffage, et l'espace de travail comme chambre de combustion (30) ou chambre de compression.

9. Dispositif de traitement dentaire selon l'une des revendications précédentes, **caractérisé en ce qu'**un élément annulaire circulaire (40), entourant la chambre de travail ou disposé sur sa circonférence, sous forme divisée dans le sens vertical, sert comme élément de source d'énergie, où celui-ci est configuré comme élément de chauffage à induction - éventuellement avec un suscepteur-, comme élément de chauffage à infrarouges, comme chauffage à résistance électrique, en particulier avec du disiliciure de molybdène, du carbure de silicium, ou des conducteurs de chauffage, comme chauffé par des micro-ondes ou comme n'importe quelle autre source d'énergie, ou que l'élément source d'énergie est configuré comme une unité d'exposition ou comme une combinaison d'une unité d'exposition avec un élément chauffant.

10. Dispositif de traitement dentaire selon l'une des revendications précédentes, **caractérisé en ce qu'**au moins une partie de l'élément source d'énergie (44) est fixée sur le plateau de réception (16), pour le chauffage et/ou l'exposition des pièces de restauration dentaire (18) par en dessous et/ou sur la paroi supérieure de la zone de travail (30), pour le chauffage et/ou l'exposition de pièces de restauration dentaire (18) par en haut.

11. Dispositif de traitement dentaire selon l'une des revendications précédentes, **caractérisé en ce que** la zone de travail (30) est essentiellement cylindrique avec un diamètre compris entre 42 mm et 120 mm et une hauteur comprise entre 22 mm et 100 mm, en particulier avec un diamètre entre 50 mm et 70 mm et une hauteur K entre 30 mm et 50 mm.

12. Dispositif de traitement dentaire selon l'une des revendications précédentes, **caractérisé en ce que** l'espace de travail (30) configuré comme chambre de combustion, dans ses salutations, particulièrement dans sa hauteur, dans l'adaptation aux exigences telles que la taille des pièces de restauration dentaire à traiter, dans laquelle la position de travail peut être changée, en particulier par le mouvement vertical du tampon (22) avec le plateau de réception (16).

13. Dispositif de traitement dentaire selon l'une des revendications précédentes, **caractérisé en ce que** la zone de travail (30) est scellée vers l'extérieur et qu'une source de pression est fournie pour la zone de travail (30) avec laquelle celle-ci peut être mise sous surpression ou sous dépression, où le tampon présente une ligne qui est en contact avec la source de pression et est désigné à l'évacuation et l'inondation de la zone de travail (30).

14. Dispositif de traitement dentaire selon l'une des revendications précédentes, **caractérisé en ce que** le plateau de réception (16) présente un plateau rotatif et/ou des cavités, où la position de présentation au-dessus de la cavité de passage (26) est jusqu'à cinq fois le diamètre du plateau de réception.

15. Dispositif de traitement dentaire selon l'une des revendications précédentes, **caractérisé en ce que** dans la zone de travail une balance est disposée, sur laquelle des pièces de restauration dentaire (18) peuvent être amenées, où le poids mesuré par la balance une fois transféré au dispositif de traitement dentaire (10) est affiché sur celui-ci.
